# EUROPEAN PATENT SPECIFICATION

(11) **EP 4 392 243 B1**
(45) Date of publication and mention of the grant of the patent: **18.06.2025**
(21) Application number: 22751868.5
(22) Date of filing: 26.07.2022
(51) Int. Cl.: B29D 30/32, B29D 30/24, B29D 30/28, B29D 30/26

(54) **TRANSFER WHEEL AND METHOD FOR TIRE BUILDING**
TRANSFERRAD UND VERFAHREN ZUR REIFENHERSTELLUNG
ROUE DE TRANSFERT ET PROCÉDÉ DE CONSTRUCTION DE PNEUMATIQUE

(30) Priority: 27.08.2021 NL 2029074
(43) Date of publication of application: 03.07.2024
(73) Proprietor: VMI Holland B.V., 8161 RK Epe (NL)
(72) Inventor: VISSER, Ruben, 8161 RK Epe (NL); REGTERSCHOT, Tom, 8161 RK Epe (NL); DE GRAAF, Martin, 8161 RK Epe (NL)
(74) Representative: Melchior, Robin
(86) International application number: PCT/NL2022/050441
(87) International publication number: WO 2023/027577

(56) References cited:
- EP-A1- 0 576 923
- EP-A1- 1 690 667
- EP-A1- 2 072 240
- EP-A1- 3 031 600
- EP-A2- 0 740 999
- WO-A1-2009/142482
- WO-A1-2017/018875
- WO-A1-2021/107772
- JP-A- 2005 041 168
- JP-A- 2019 126 976
- JP-A- H09 193 259
- JP-A- S6 478 826
- KR-A- 20180 054 937
- US-A1- 2009 289 143

## Description

### BACKGROUND

The invention relates to a transfer wheel and a method for tire building.

WO 2018/111091 A2 discloses a tire building drum for single stage tire building. Conventionally, a pre-assembly of sidewalls and an inner-liner is applied around the tire building drum over a full revolution and is subsequently spliced. The leading end of the pre-assembly is retained in position on the tire building drum with the use of a clip bar that is applied to the outside of the tire building drum. The sidewalls rest on the drum halves on opposite sides of the center section, ready to be turned-up by turn-up arms.

EP 1690667 A1 discloses a transfer wheel for a tire component to a tire building drum according to the preamble of independent claim 1.

### SUMMARY OF THE INVENTION

In a new way of manufacturing tires, the sidewalls are applied separately from and/or prior to applying the inner-liner. The known tire building drum has no means to keep the leading ends of the sidewalls in position on the drum halves. Moreover, the sidewalls are transferred to the tire building drum using a transfer wheel. The sidewalls may fail to release from the transfer wheel during the transfer.

It is an object of the present invention to provide a transfer wheel and a method for tire building, wherein the transfer of the tire components from the transfer wheel to the tire building drum can be improved.

According to a first aspect, the invention provides a transfer wheel for transferring a tire component to a tire building drum according to independent claim 1, wherein the transfer wheel defines a circumferential surface extending about a transfer wheel axis, wherein the transfer wheel comprises a pusher segment arranged at a first segment position along said circumferential surface, wherein the pusher segment comprises a segment body that is configured to be flush with the circumferential surface and at least one push-off member in said segment body movable relative to the segment body in a push-off direction facing radially outward relative to the transfer wheel axis.

The at least one push-off member can effectively separate the tire component from the transfer wheel, thereby ensuring that the tire component can be successfully transferred from the transfer wheel to the tire building drum.

In a preferred embodiment the at least one push-off member defines a shape of the circumferential surface that is adaptable to a contour of the tire component when transferring said tire component to the tire building drum. The at least one push-off member can thus transfer the tire component to the tire building drum while closely matching, following or adapting to the contour of the tire component across the width of said pusher segment. The tire component can therefore be transferred securely and with reduced risk of letting go of the tire component early and/or damaging the tire component.

According to the invention the at least one push-off member is movable in the push-off direction between a flush position in which the at least one push-off member is flush with the circumferential surface and a push-off position radially outside of said circumferential surface. In the flush position, deformation of the tire component on the transfer wheel by one or more of the at least one push-off member can be prevented.

In a further embodiment the at least one push-off member is pneumatically driven. The at least one push-off member may for example be connected to the same source of pneumatic pressure that is used to operate other parts of the transfer wheel.

According to the invention the at least one push-off member comprises a plurality of push-off members arranged adjacent to each other in a lateral direction parallel to the transfer wheel axis, wherein the plurality of push-off members are movable relative to each other and the segment body in a push-off direction facing radially outward relative to the transfer wheel axis. The plurality of push-off members can closely match, follow or adapt to the contour of the tire component across the width of the pusher segment. Said contour may not be a constant. In particular, the contour may be flat when the tire component is still adhered to the transfer wheel, while the flat contour may change to a non-flat contour as the tire component is transferred to and/or pressed onto the tire building drum. The plurality of push-off members may therefore constantly adapt to the changing contour to not only effectively push off the tire component during the transfer, but to also ensure proper or uniform adherence of the tire component to the tire building drum, even when the contour is non-flat.

Preferably, the segment body comprises a plurality of slots for receiving the plurality of push-off members, wherein the segment body further comprises a duct for connecting the plurality of slots to a source of compressed air or vacuum. By pressurizing the slots, the push-off members can be urged outwards, while supplying a partial vacuum can cause the push-off members to be pulled into the slots again.

In another embodiment the pusher segment comprises at least ten push-off members. The higher the number of push-off members, the more accurately the group of push-off members can match, follow or adapt to the contour of the tire component.

Alternatively, the at least one push-off member comprises a bladder. The bladder can be inflated and/or deflated to closely match, follow or adapt to the contour of the tire component across the width of the pusher segment.

In another embodiment the transfer wheel comprises a mounting body, wherein the pusher segment is detachably mounted to the mounting body in said first segment position. The pusher segment can thus be removed and/or replaced by another pusher segment with a different configuration, for example when switching between types of tire components.

In another embodiment the transfer wheel comprises a plurality of retaining segments distributed about the transfer wheel axis in a plurality of further segments positions along the circumferential surface for retaining the tire component to said circumferential surface, wherein the pusher segment is exchangeable with any one of the retaining segments in any one of the further segment positions. Consequently, the pusher segment can be placed in any one of the further segment positions depending on where the part of the tire component that is to be separated is expected to be on the transfer drum. The pusher segment can take the place of the retaining segment that is in the respective further segment position. The retaining segment that is taken out to make space for the pusher segment can be placed in the segment position previously occupied by the pusher segment.

According to a second aspect (see independent claim 8), the invention provides a method for transferring a tire component to a tire building drum with the use of the transfer wheel according to any one of the embodiments of the first aspect of the invention, wherein the method comprises the steps of:
- moving the at least one push-off member in the push-off direction to separate the tire component from the transfer wheel at the first segment position; and
- applying the tire component to the tire building drum with pressure exerted onto said tire component by the at least one push-off member.

The method relates to the practical implementation of the transfer wheel according to the first aspect of the invention and thus has the same technical advantages, which will not be repeated hereafter.

In a preferred embodiment the tire component has a contour with a varying thickness in a cross section at the first segment position, wherein the at least one push-off member is configured to match the contour of the tire component when moving in the push-off direction.

In another embodiment the method further comprises the step of:
- retracting the at least one push-off member in a retraction direction opposite to the push-off direction independently of the contact between the at least one push-off member and the tire component. Hence, the push-off member (s) can be lifted away from the tire component to reduce the pressing force exerted by the pusher segment on the tire component and/or to provide a clearance between said pusher segment and the tire component.

In a further embodiment the tire component is a side wall. The side wall has a cross-section with a varying thickness. When retained to the transfer wheel, the surface of the side wall facing the transfer wheel is flat or substantially flat. However, when the side wall is transferred to the tire building drum, the opposite surface has a non-flat contour which may be difficult to retain to tire building drum. The aforementioned at least one push-off member not only pushes off the side wall from the transfer wheel, it may also apply pressure to the side wall to improve adherence of the side wall to the tire building drum. In particular, when using a plurality of push-off members, as mentioned earlier, the side wall can be pressed tightly against the tire building drum while conforming its non-flat contour to the tire building drum.

In another embodiment, the method involves the method comprises the steps of:
- applying a first side wall to the tire building drum and forming a first splice between a leading end and a trailing end of said first side wall at a first splice position on the tire building drum;
- applying a second side wall to the tire building drum and forming a second splice between a leading end and a trailing end of said second side wall at a second splice position on the tire building drum;
wherein the second splice position is offset in a circumferential direction of the tire building drum with respect to the first splice position. The offset can reduce imbalance in the tire that is ultimately formed as a result of the splices.

According to a third aspect, the present disclosure provides a method for applying a tire component, in particular a side wall, to a tire building drum, wherein the method comprises the steps of:
- supplying the tire component to the tire building drum in a supply direction, wherein the tire component has a cross section perpendicular to the supply direction that defines a first tapering portion at a first lateral end of the cross section;
- providing an applicator with a first application member;
- applying the tire component to the tire building drum with pressure exerted onto said tire component at the first tip portion by the first application member.

It may be difficult to reliably adhere the tire component to the tire building drum, in particular when the first tapering portion defines a non-flat portion of the tire component at a side of said tire component that faces the tire building drum during the application. When said non-flat portion is not tightly pressed against the tire building drum, the vacuum elements provided in the tire building drum may fail to properly retain the tire component. By providing an applicator that presses down onto the tire component at the fist tapering portion, the tire component can be deformed at said first tapering portion to assume a more flat contour that can be retained more reliably with suction.

Preferably, the cross section of the tire component defines a second tapering portion at a second lateral end of the cross section opposite to the first lateral end, wherein the applicator comprises a second application member, wherein the method further comprises the step of:
- applying the tire component to the tire building drum with pressure exerted onto said tire component at the second tip portion by the second application member. Hence, both tapering portions can be pressed down onto the tire building drum to reliably retain the tire component to the tire building drum.

According to a fourth, unclaimed aspect, the disclosure provides a cover for covering a gap between subsequent turn-up arms in a circumferential direction of a tire building drum, wherein the cover comprises a plate body with a support surface for supporting a tire component on said plate body and at least one retaining element in said support surface for retaining the tire component to said cover.

The retaining element provides a means for retaining the tire component to the tire building drum in a position where that was previously not possible. More specifically, the tire component can be retained to the tire building drum at the position of the turn-up arms, more specifically on one of the covers between the turn-up arms. Retaining the tire component in this way can be particularly convenient when the tire component is a sidewall that is to be applied around the tire building drum separately from and/or prior to applying the inner-liner. The leading end of said side wall can be reliably retained until the entire side wall is applied around the tire building drum and the trailing end of said side wall is spliced or stitched to said leading end.

Preferably, the at least one retaining element is or comprises a plurality of retaining elements. The tire component can be held more securely and/or the retaining elements can be selectively operated to provide a more flexible retaining functionality.

In one embodiment each retaining element of the plurality of retaining elements is independently switchable between an enabled state in which the respective retaining element retains the tire component and a disabled state in which the respective retaining element releases the tire component. Hence, one or more of the retaining elements can be selectively switched to the disabled state, while others of the retaining elements remain in the enabled state.

In one embodiment the plurality of retaining elements comprises a plurality of first suction openings. The first suction openings can retain the tire component through suction, thereby preventing damage to the tire component compared to retaining elements such as needles. Moreover, suction allows for retaining tire components that can do not have metal reinforcement cords and that can not be retained via magnetism.

Preferably, the cover comprises a closing valve at each first suction opening of the plurality of first suction openings that is switchable between an open state in which the respective first suction opening is open and a closed state in which the respective first suction opening is closed. By closing one or more of the first suction openings not covered by the tire component during retaining of said tire component, pressure loss or air leakage through said one or more first suction openings can be reduced or prevented.

In a further embodiment the closing valves are manually switchable. The state of the closing valves can therefore be set manually by a human operator prior to application of said tire component around the tire building drum.

In a further embodiment the closing valves are switchable with the use of a tool external to the cover. Preferably, each closing valve comprises a slot for receiving the tip of a screw driver. A tool, such as a screw driver, can be used to quickly set the state of the respective closing valves, in particular when the number of closing valves is limited.

In a further embodiment the closing valves are slide valves, in particular rotary slide valves. The slide valves can be conveniently operated manually, switching between states by merely sliding or rotating.

In a further embodiment each closing valve comprises a circular base plate with one or more ports and a circular closure cap that is concentrically mounted over and rotatable with respect to the base plate, wherein the closure cap comprises one or more apertures which are arranged to be aligned with the one or more ports in at least one angular position of the closure cap. Depending on the amount of ports and apertures, the closure cap only has to be rotated over a limited angle to switch between the states.

In an alternative embodiment the closing valves are automatically switchable. This can save time when setting up the tire building drum for a different tire components. In particular, the amount of closing valves in the open state can be adjusted automatically to the dimensions of the tire component.

Preferably, the closing valves are push-to-open check valves that are switchable from the closed state to the open state when the tire component is received on the cover through direct contact with said tire component. Hence, the mere presence or absence of the tire component on the closing valve can switch the respective closing valve between the open state and the close state.

In another embodiment the plurality of retaining elements comprises a second suction opening that is always open. When it is certain that the tire component is always applied to the tire building drum at the location of the second suction opening, the second suction opening does not need to be closed. Hence, the cover can be simplified.

Preferably, the plurality of first suction openings form an array, wherein the second suction opening is located at one end of said array. Said one end may for example be the end of the array closest to the center section of the tire building drum. The tire component is likely to always be on the cover at this end of the array.

Additionally or alternatively, each first suction opening of the plurality of first suction openings defines a first surface area for applying suction to the tire component, wherein the second suction opening defines a second surface area for applying suction to the tire component, wherein said second surface area is larger than the first surface area. Hence, more suction force can be generated with the same suction per unit of the surface area. Consequently, the tire component can be retained more reliably at the second surface area.

In another embodiment the plate body extends in a longitudinal direction, wherein the plurality of retaining elements are positioned in a single file in said longitudinal direction. The cover can thus be relatively narrow and fit in the circumferential direction between the turn-up arms.

In another embodiment the cover comprises a duct for connecting the at least one retaining element to a source of partial vacuum.

Preferably, the plate body has a back surface for placement of the cover on a cover base of the tire building drum, wherein the duct comprises a first duct section extending in said back surface. The first duct section can be sealed when the plate body is placed on the cover base.

Additionally or alternatively, the duct comprises a second duct section extending internally in the plate body. The second duct section does not rely on a sealing cooperation with another part of the tire building drum and can communicate with the retaining elements in a sealed manner.

In a further embodiment the cover further comprises a main check valve in or communicating with the duct. The main check valve can allow flow in one direction only. In particular, it can be prevented that compressed air is fed to the at least one retaining element.

According to a fifth, unclaimed aspect, the disclosure provides a tire building drum comprising the cover according to any one of the embodiments of the fourth aspect of the invention, wherein the tire building drum further comprises a plurality of turn-up arms and a cover base for mounting the cover in a cover position relative to at least one turn-up arm of the plurality of turn-up arms.

The tire building drum according to the fifth aspect includes the cover according to the fourth aspect of the invention and thus has the same technical advantages, which will not be repeated hereafter.

Preferably, the plate body extends in a longitudinal direction that is parallel to said at least one turn-up arm when the said at least one turn-up arm is in an arms-down position. Hence, the cover can span the gap between the turn-up arms in the circumferential direction while retaining the tire component in at least one circumferential position on the tire building drum in the longitudinal direction between a pair of turn-up arms.

More preferably, the at least one turn-up arm is movable from the arms-down position into an arms-up position, wherein the cover is arranged to remain in the arms-down position. It can thus be prevented that the cover interferes with the turn-up operation of the turn-up arms.

In a further embodiment the plate body has a back surface for placement of the cover on a cover base of the tire building drum, wherein the cover comprises a duct for connecting the at least one retaining element to a source of partial vacuum, wherein the duct comprises a first duct section extending in said back surface, wherein the cover base at least partially seals the first duct section. The first duct section can be sealed when the plate body is placed on the cover base.

In a further embodiment the plate body has a longitudinal direction, wherein the cover base is retractable in a retraction direction parallel to said longitudinal direction to expose said at least one turn-up arm prior to turning-up said at least one turn-up arm. The cover can thus be retracted together with the cover base to allow direct contact between the rollers at the end of the turn-up arms and the tire component during the subsequent turn-up operation.

Preferably, the tire building drum comprises a pressure chamber for driving the retraction of the cover base in the retraction direction with compressed air and driving a return of the cover base in a return direction opposite to the retraction direction with a partial vacuum, wherein the at least one retaining element comprises a plurality of first suction openings that are arranged connected to the pressure chamber via a main check valve that is arranged to open when the partial vacuum is applied to the pressure chamber. The main check valve can allow flow in one direction only. In particular, it can be prevented that compressed air is fed to the retaining elements. Hence, the pressure chamber can be used for two functions: (1) driving the retraction of the cover base with compressed air and (2) returning the cover base to the original position in the return direction with a partial vacuum and continuing to supply said partial vacuum to the retaining elements of the cover when the cover base has already been fully returned.

According to a sixth, unclaimed aspect, the disclosure provides a method for applying a tire component to the tire building drum according to any one of the embodiments of the fifth aspect of the invention, wherein the method comprises the steps of:
- applying the tire component around the tire building drum at the location of the cover; and
- retaining the tire component to said cover with the use of the at least one retaining element.

The method relates to the practical implementation of the cover according to the fourth aspect of the invention in the tire building drum according to the fifth aspect of the invention, and thus has the same technical advantages, which will not be repeated hereafter.

In one embodiment the method further comprises the step of retaining the tire component to the cover through suction.

In another embodiment the tire component is retained to said cover prior to turning-up the plurality of the turn-up arms.

In another embodiment the method further comprises the step of:
- clamping the tire component onto the tire building drum with the use of a clip bar during at least a part of the application of said tire component around the tire building drum. The clip bar is a tool that is external to the tire building drum. It can be fitted mechanically or magnetically. It can be removed at any stage. The tire component can be held more securely by a combination of the at least one retaining element and the clip bar. In particular, the clip bar can prevent that a particularly heavy tire component separates from the tire building drum during fast rotation of said tire building drum. The clip bar can be used to clamp the tire component at or near the same end that is retained by the at least one retaining element. The clip bar can be used prior to, during and/or after the at least one retaining element retains the tire component. In another embodiment the tire component is a side wall.

### BRIEF DESCRIPTION OF THE DRAWINGS

The invention will be elucidated on the basis of an exemplary embodiment shown in the attached schematic drawings, in which:
figure 1 an isometric view of a tire building drum with a cover according to a first exemplary embodiment of the invention;
figure 2 shows an isometric view of a detail of the tire building drum with the cover according to figure 1;
figure 3 shows a cross section of the tire building drum at the cover according to line III-III in figure 2;
figures 4A and 4B show a top view of a closing valve of the cover in an open state and a closed state, respectively;
figure 5 shows a cross section of an alternative cover according to a second exemplary embodiment of the invention;
figure 6 shows a side view of the tire building drum according to figure 1 and a transfer wheel for transferring a tire component to said tire building drum;
figure 7 shows an isometric view of a detail of the transfer wheel according to figure 6;
figure 8 shows a cross section of the transfer wheel cooperating with the tire building drum according to figure 6;
figure 9 shows a cross section of an alternative transfer wheel cooperating with the tire building drum according to figure 6;
figure 10 shows a cross section of the tire building drum according to figure 3, cooperating with a clip bar;
figure 11 shows a side view of an applicator according to a second exemplary embodiment of the invention for applying a tire component to a tire building drum;
figure 12 shows a cross section of the applicator according to the line XII-XII in figure 11; and
figure 13 shows an isometric view of an alternative tire building drum with a cover according to a third exemplary embodiment of the invention.

### DETAILED DESCRIPTION OF THE INVENTION

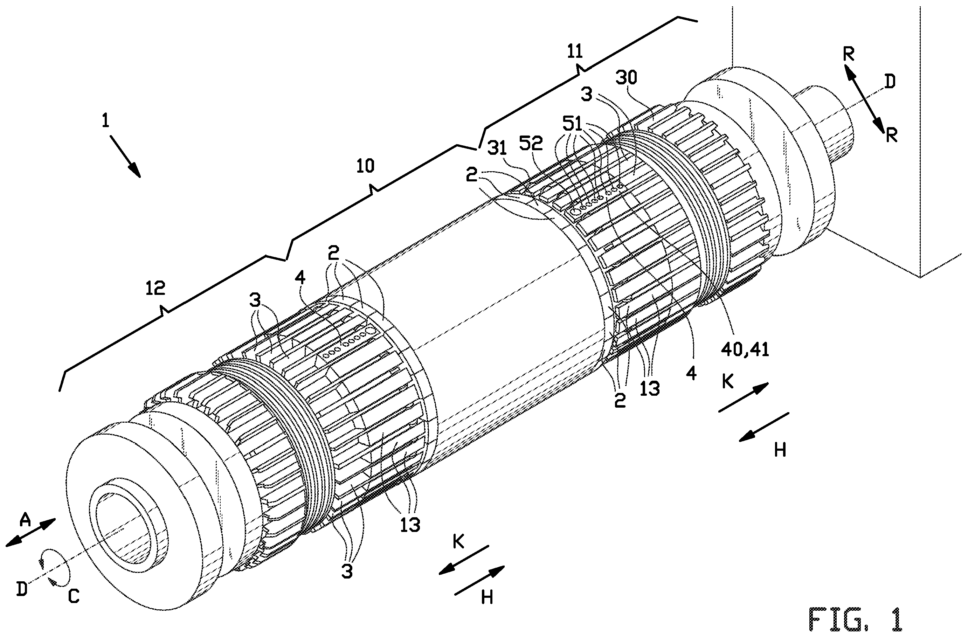

Figure 1 shows a tire building drum 1 for shaping one or more tire components into a green or unvulcanized tire.

The tire building drum 1 is rotatable about a drum axis D. The drum axis D defines an axial direction A, a circumferential direction C about said drum axis D and a radial direction R perpendicular to said drum axis D. The tire building drum 1 has a center section 10 for shaping a carcass portion of the one or more tire components. The tire building drum 1 is further provided with a first drum half 11 and a second drum half 12 on opposite sides of said center section 10 in the axial direction A, for turning-up one or more tire components 9, including a side wall, against the shaped carcass portion. The tire building drum 1 also comprises a plurality of bead-lock segments 2 for retaining bead. The bead-lock segments 2 are located in the axial direction A between the first drum half 11 and the center section 10 and between the second drum half 12 and the center section 10.

Each drum half 11, 12 is provided with a plurality of turn-up arms 3 which are distributed in the circumferential direction C and which are movable relative to the drum axis D between an arms-down position and an arms-up position for turning-up the parts of the tire components at a side of the bead-lock segments 2 facing away from the center section 10 against the shaped part of the tire components at the center section 10. Each turn-up arm 3 comprises an elongate arm body 30 and a turn-up roller 31 at the distal end of said arm body 30. The turn-up process is known per se from WO 2018/111091 A2 and incorporated herein by reference.

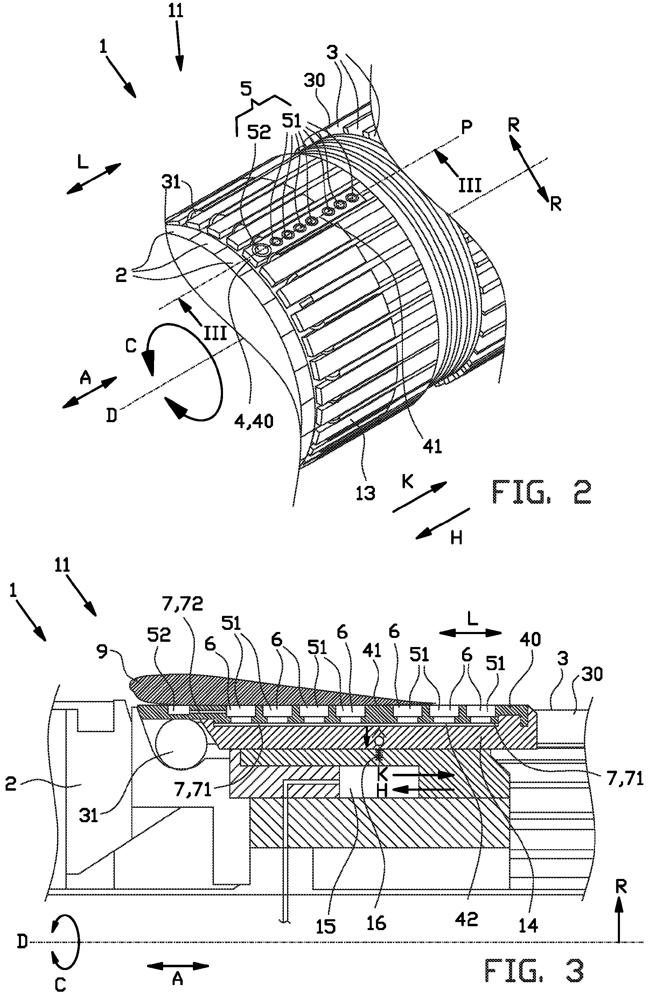

As shown in figure 1 and in more detail in figure 2, the tire building drum 1 further comprises a cover member, a cover part or a cover 4 according to a first exemplary embodiment of the present invention and a plurality of further covers 13. Each covers 4, 13 is arranged in the gap between a pair of adjacent turn-up arms 3 in the circumferential direction C for at least partially bridging, spanning or covering said gap. The cover 4 according to the present invention is located in one cover position P only. The further covers 13 are conventional covers. Alternatively, one or more of the further covers 13 or all of the covers 13 may be replaced by the cover 4 according to the present invention.

The cross section of figure 3 shows the cover 4 according to the first exemplary embodiment in more detail. The cover 4 is formed as a cover plate. In particular, the cover 4 comprises a plate body 40 with a support surface 41 for supporting a tire component 9 on said plate body 40 and a back surface 42 for mounting the plate body 40 on the tire building drum 1. The tire component 9 is preferably a side wall that is applied directly onto the tire building drum 1 at the position of the cover 4. The plate body 40 extends in a longitudinal direction L, parallel or substantially parallel to the axial direction A. The longitudinal direction L of the plate body 40 is also parallel or substantially parallel to the longitudinal of the turn-up arms 3 when said turn-up arms 3 are in the arms down position, as shown in figure 3. The plate body 40 is configured to at least partially cover the turn-up rollers 31 of the adjacent turn-up arms 3. The cover 4 is further arranged to remain behind in the arms-down position when the turn-up arm 3 is moved from the arms-down position towards and/or into the arms-up position.

As shown in figure 3, the tire building drum 1 comprises a cover base 14 for mounting the cover 4 on the respective drum half 11, 12 between the pair of adjacent turn-up arms 3. In particular, the back surface 42 of the plate body 40 is arranged to be mounted to said cover base 14. The further covers 13 are mounted on similar cover bases (not shown) distributed circumferentially about the drum axis D. Each cover base 14 is movable in a retraction direction K parallel to the longitudinal direction L of the cover 4 and/or the axial direction A and in a return direction H opposite to the retraction direction K. The retraction direction K faces away from the center section 10. The cover base 14 is movable between a cover position in which the plate body 40 at least partially covers the turn-up rollers 31 at the distal ends of the respective adjacent turn-up arms 3 and a retracted position in which the plate body 40 at least partially expose the turn-up arms 3, in particular the turn-up rollers 31 at the distal ends thereof, prior to turning-up said at least one turn-up arms 3.

The tire building drum 1 further comprises a pressure chamber 15 for driving the retraction of the cover base 14 in the retraction direction K with compressed air and driving a return of the cover base 14 in a return direction H opposite to the retraction direction L with a partial vacuum.

The cover 4 differs from the further covers 13 in that it comprises at least one retaining element 5 in the support surface 41 for retaining the tire component 9 to said cover 4. In this exemplary embodiment, the cover 4 comprises a plurality of retaining elements 5 in the support surface 41 for retaining the tire component 9 to said cover 4. The further covers 13 are solely configured for supporting the tire component 9, but not for retaining.

As further shown in figure 3, the plurality of retaining elements 5 comprises a plurality of first suction openings 51 and a second suction opening 52. In this example, the plurality of first suction openings 51 are grouped into an array, in particular a linear array. In other words, the plurality of first suction openings 51 are positioned in a single file, one behind the other, parallel to the axial direction A. The second suction opening 52 is located at the end of the array of first suction openings 51 closest to the center section 10. Each first suction opening 51 defines a first surface area for applying suction to the tire component 9. Similarly, the second suction opening 52 defines a second surface area. In this example, the second surface area is larger than the first surface area. Moreover, in this example, the first suction openings 51 and the second suction opening 52 are circular. Alternatively, the suction openings 51, 52 may have a different shape.

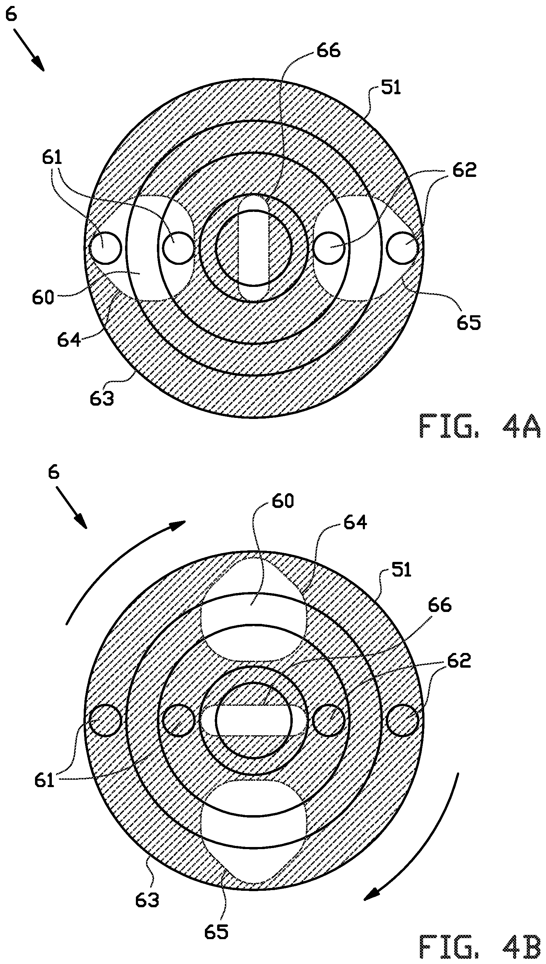

The cover 4 further comprises a closing valve 6 at each first suction opening 51. In this example, the second suction opening 52 does not have such a closing valve 6. In this example, the closing valves 6 are located at, near, close to or flush with the support surface 41. Alternatively, the closing valves 6 may be in a recessed position relative to the support surface 41. Each closing valve 6 is operable, movable and/or switchable between an enabled or open state, as shown in figure 4A, in which the respective first suction opening 51 is open and a disabled or closed state, as shown in figure 4B, in which the respective first suction opening 51 is closed. In the open state, the first suction opening 51 can be brought into fluid communication with a source of partial vacuum. In the closed state, the first suction opening 51 can be disconnected from the source of partial vacuum. The closing valves 6 are independently and/or individually switchable with respect to each other. In other words, one or more closing valves 6 may be switched to the closed state, while others remain in the open state.

In this specific embodiment, the closing valves 6 can be manually switched between the open state and the closed state. In other words, the states of the closing valves 6 are not controlled automatically. The operator may switch the closing valves 6 by directly interacting with said closing valves 6, or by using a manually operated tool, such as a screw driver, that is not part of the tire building machine 1 and/or the cover 4.

As shown in figures 4A and 4B, the closing valves 6 are slide valves, in particular rotary slide valves. In particular, each closing valve 6 comprises a circular base plate 60 that fits in the respective first suction opening 51. The base plate 60 has four ports 61, 62 that allow for fluid communication through said base plate 60. The closing valve 6 further comprises a circular closure cap 63 that is concentrically mounted over and rotatable with respect to the base plate 60. The closure cap 63 comprises two apertures 64, 65 which are arranged to be aligned with the four ports 61, 62 in two angular positions of the closure cap 63, one-hundred-and-eighty degrees apart. The number of ports 61, 62 and the number of apertures 64, 65, their shapes and relative positions may be chosen differently. In this example, the closure cap 63 can be rotated over ninety degrees to switch the closing valve 6 between the open state of figure 4A and the closed state of figure 4B. The closure cap 63 is provided with an elongate slot 66 for receiving the tip of a screw driver to enable the previously mentioned, manual switching.

Depending on the width of the tire component 9 that has to be retained by the cover 4, the tire component 9 may not cover all of the first suction openings 51. Anticipating this situation, the operator can disable one or more first suction openings 51 which will not be covered by the tire component 9 in use by switching the corresponding closing valves 6 to the closed state prior to the tire building operation. Hence, pressure loss and/or leakage through said uncovered first suction openings 51 during the subsequent tire building operation can be prevented. In the embodiment as shown, there is only one cover 4 per drum half 11, 12. Hence, the manual operation, although relatively slow compared to an automated version, can still be completed sufficiently quickly to prevent any significant downtime when switching over to a different tire component 9.

As best seen in figure 3, the cover 4 further comprises a duct 7 for connecting the plurality of retaining elements 5 to a source of partial vacuum. The duct 7 comprises a first duct section 71 extending in said back surface 42. The first duct section 71 can establish fluid communication between any one of the first suction openings 51 and the source of partial vacuum. In particular, the first duct section 71 is common to or interconnects each of the first suction openings 51. The first duct section 71 is closed or sealed when the plate body 40 is mounted on the cover base 14 of the respective drum half 11, 12. The duct 7 comprises a second duct section 72 extending internally in the plate body 40 in particular in the thin portion of said plate body 40 that projects towards the center section 10 from the cover base 14. The second duct section 72 can establish fluid communication between the second suction opening 52 and the source of partial vacuum.

The tire building drum 1, the respective drum half 11, 12 or the cover 4 further comprises a main one-way valve or check valve 16 in or communicating with the duct 7. In this example, the main check valve 16 is positioned between the pressure chamber 15 and the suction openings 51, 52 to stop flow of compressed air from the pressure chamber 15 to the suction openings 51, 52 when the pressure chamber 15 is used to drive the cover base 14 in the retraction direction K and to allow flow of a partial vacuum between the suction openings 51, 52 and the pressure chamber 15 when the pressure chamber 15 is used to return the cover base 14 in the return direction H. The partial vacuum may be maintained or regenerated after the cover base 14 has been returned, to generate suction at the suction openings 51, 52 for retaining of the tire component 9 to the cover 4 during a subsequent tire building cycle.

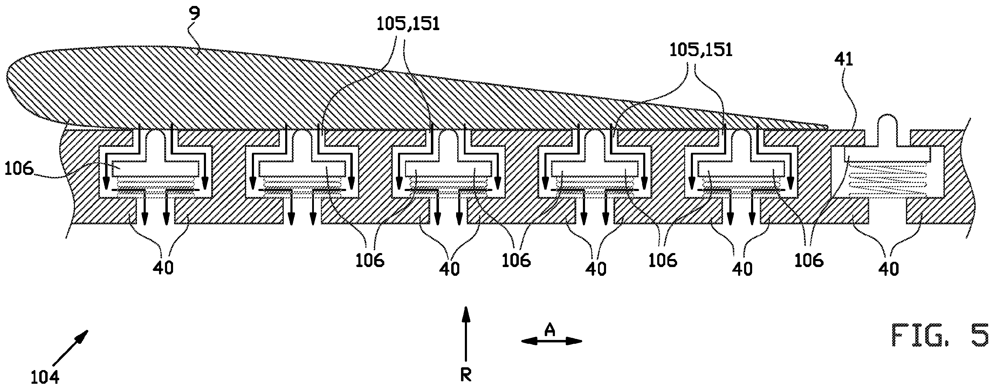

Figure 5 shows an alternative cover 104 according to a second exemplary embodiment of the invention, which differs from the previously discussed cover 4 in that the switching of the closing valves 106 between the open state and the closed state can be automated. This is convenient when more than one cover 4 per drum half 11, 12 is used or when the states need to be changed quickly without operator intervention. In this example, the closing valves 106 are push-to-open check valves that are switchable from the closed state to the open state when the tire component 9 is received on the alternative cover 104 through direct contact with said tire component 9. In other words, the push-to-open check valves are operated solely by the weight of the tire component 9 exerted thereon, provided that the alternative cover 104 is in an upwardly facing receiving position to receive the tire component 9 with at least a component of its gravitational force exerted on the alternative cover 104 in a downward direction. Alternatively, the switching of the closing valves 106 may be automated mechanically, for example by using actuators, servos, solenoids or the like.

Alternative types of closing valves may be used with the same effect, such as linear slide valves, gate valves, diaphragm valves, or the like.

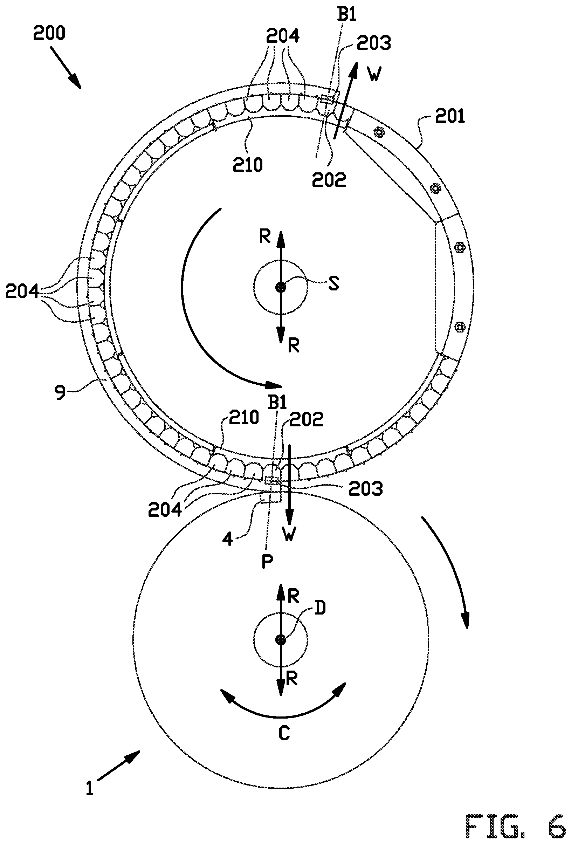

Figures 6-8 show a transfer drum or a transfer wheel 200 for transferring the tire component 9, in particular a side wall, to the tire building drum 1. The general operation of a transfer wheel is described in WO 2021/107772 A1, which is incorporated herein by reference.

As shown in figure 6, the transfer wheel 200 defines a circumferential surface 201 extending about a transfer wheel axis S. The transfer wheel 200 comprises one or more pusher segments 202 and a plurality of retaining segments 204 distributed about the transfer wheel axis S in a first segment position B1 and a plurality of further segments positions B2-Bn along the circumferential surface 201. The retaining segments 204 are configured for retaining the tire component 9 to said circumferential surface 201, for example with suction or needles. Each pusher segment 202 is configured to separate the part of the tire component 9 supported thereon from the transfer wheel 200 when said part is to be transferred to the tire building drum 1. In this example, the transfer wheel 200 has two pusher segments 200, one at a first circumferential position on the transfer wheel 200 that is supposed to receive the leading end of the tire component 9 and one at a second circumferential position on the transfer wheel 200 that is supposed to receive the trailing end of the tire component 9.

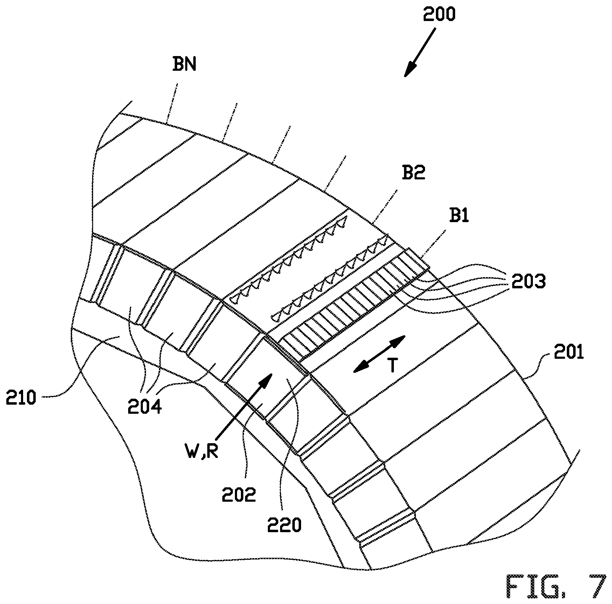

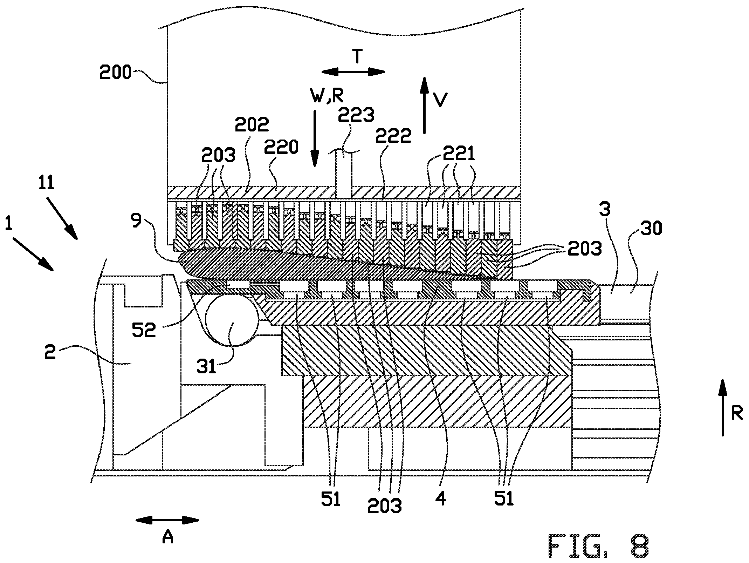

Figures 7 and 8 shown one of the pusher segments 202 in more detail. Its operation is representative of the operation of both pusher segments 202. The pusher segment 202 comprises a segment body 220 that is configured to be flush with the circumferential surface 201 and a plurality of push-off members 203 in said segment body 220 arranged adjacent to each other in a lateral direction T parallel to the transfer wheel axis S. The plurality of push-off members 203 are movable relative to each other and the segment body 220 in a push-off direction W facing radially outward or in a radial direction R relative to the transfer wheel axis S. In particular, each push-off member 203 of the plurality of push-off members 203 is movable in the push-off direction between a flush position in which the respective push-off member 203 is flush with the circumferential surface 201 and a push-off position radially outside of said circumferential surface 201.

Preferably, the pusher segment 202 comprises at least ten push-off members 203. In this example, the pusher segment 202 has twenty-two push-off members 203.

The plurality of push-off members 203 define a shape of the circumferential surface 201 that is adaptable to a contour of the tire component 9 when transferring said tire component 9 to the tire building drum 1.

As best seen in figure 8, the plurality of push-off members 203 are pneumatically driven. In particular, the segment body 220 comprises a plurality of slots 221 for receiving the plurality of push-off members 203, wherein the segment body 220 further comprises a duct 222 for connecting the plurality of slots 221 to a source of compressed air or vacuum. The push-off members 203 are driven outwards with compressed air when it is time to separate the tire component 9 from the transfer wheel 200, for example when the pusher segment 202 is directly opposite to the cover 4 of the tire building drum 1. The push-off members 203 can be individually and/or independently moved inwards in a retraction direction V opposite to the push-off direction W against the pressure provided by the compressed air when the respective push-off members 203 to adapt to the cross section, contour or shape of the tire component 9. The pressure exerted by the compressed air is maintained throughout the transfer to maintain a pressure force on the tire component 9. The push-off members 203 can also be actively withdrawn or retracted in the retraction direction V by generating a partial vacuum in the slots 221, for example at the end of the transfer operation.

The pusher segments 200 as shown in figure 6 are exchangeable with any one of the retaining segments 204 in any one of the further segment positions B2-Bn. In particular, the transfer wheel 200 comprises a mounting body 210 which defines the plurality of segment positions B1-Bn, each with a connection to a source of compressed air or a partial vacuum. Each pusher segment 202 can be detached from mounting body 210 and reconnected to the mounting body 210 in any of the further segment positions B2-Bn. More in particular, each of the pusher segments 202 and the retaining segments 204 is provided with a universal connection 223, as shown in figure 8, which is mated with the connection at the mounting body 210 for connection to the source of compressed air or a partial vacuum. Because the connection is universal, the segments 202, 204 can be easily switched out or exchanged between segment positions B1-Bn, while maintaining the same functionality in the new segment position.

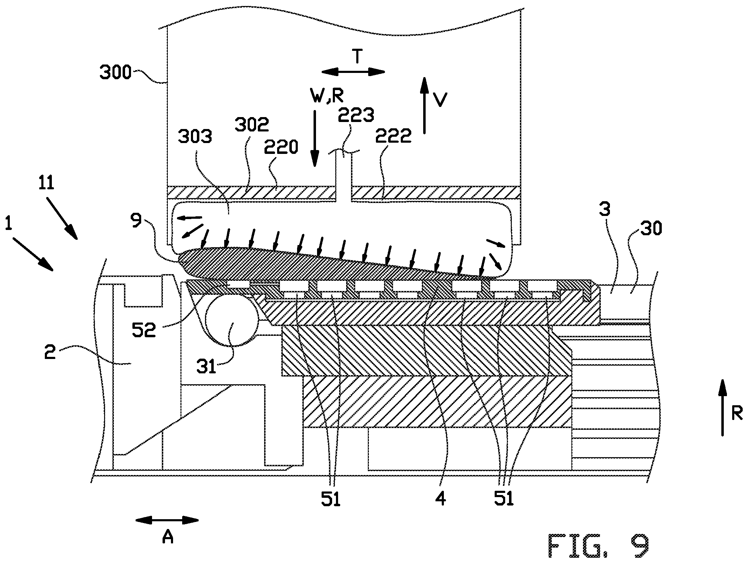

Figure 9 shows an alternative transfer drum or transfer wheel 300 for transferring the tire component 9 to the tire building drum 1. The alternative transfer wheel 300 differs from the aforementioned transfer wheel 200 in that its pusher segment 302 holds a single push-off member 303 in the form of a bladder. The bladder can be inflated and/or deflated to closely match, follow or adapt to the contour of the tire component 9 across the width of the pusher segment 302.

A method for applying the tire component 9 to the aforementioned tire building drum 1, optionally with the use of one of the aforementioned transfer wheels 200, 300, will now be briefly elucidated with reference to figures 1-10.

The method comprises the step of applying the tire component 9 around the tire building drum 1 at the location of the cover 4, 104, as shown in figures 3 and 5, optionally with the use of the transfer wheel 200, 300, as shown in figures 6 an d9. The pusher segment 202, 302 at the leading end of the tire component 9 may be supplied with compressed air such that the at least one push-off member 203, 303 moves towards the tire building drum 1 in the push-off direction W, while the at least one push-off member 203, 303 matches, follows or adapts to the contour of the tire component 9 between the transfer wheel 200, 300 and the tire building drum 1, as shown in figures 8 and 9.

Once the leading end of the tire component 9 is transferred from the transfer wheel 200, 300 to the tire building drum 1, it can be retained to the cover 4 with the use of the plurality of retaining elements 5, 105. The operator may have previously closed or disabled the retaining elements 5, 105 which are not covered by the tire component 9 during the transfer, for example by manually turning the closure cap 63 from the open state, as shown in figure 4A, to the closed state, as shown in figure 4B. In this example, the tire component 9 is retained to the cover 4, 104 through suction.

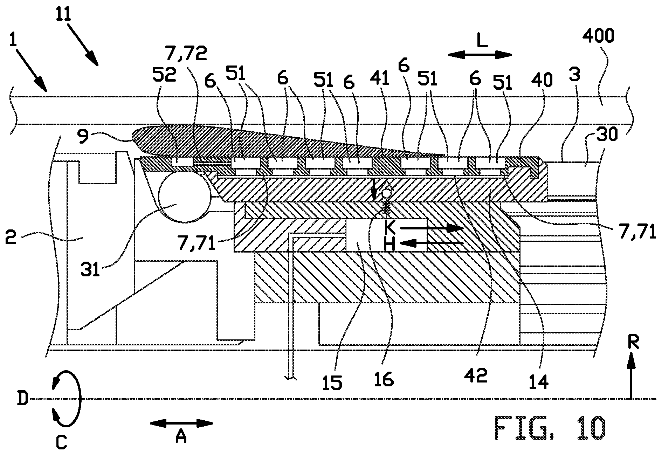

Optionally, as shown in figure 10, the tire component 9 can be additionally clamped to or onto the tire building drum 1 with the use of a clip bar 400 during at least a part of the application of said tire component 9 around the tire building drum 1. The clip bar 400 can prevent that the tire component 9 separates from the tire building drum 1 during fast rotation of said tire building drum 1. The clip bar 400 can be used to clamp the tire component 9 at or near the same end that is retained by the retaining elements 5, 105. The clip bar 400 can be used prior to, during and/or after the retaining elements 5, 105 retain the tire component 9.

The above steps may be repeated to transfer the trailing end of the tire component 9 from the transfer wheel 200, 300 to the tire building drum 1, i.e. by operating the pusher segment 202 at said trailing end. In this example, there is no cover 4, 104 in the tire building drum 1 that is dedicated to retain the trailing end of the tire component 9. The trailing end is immediately spliced or stitched to the leading end. Alternatively, a further cover (not shown) may be provided with retaining elements to retain the trailing end in a similar way to the leading end.

Note that the tire component 9 is retained to the cover 4, 104 prior to turning-up the plurality of the turn-up arms 3, as reflected by the arms-down position of the turn-up arms 3 in figure 3. In particular, the tire component 9 is wound around the tire building drum 1 until the leading end and the trailing end of said tire component 9 can be spliced or stitched. Then the cover 4, 104 can stop retaining the tire component 9, for example by terminating the suction, and the turn-up operation can be performed.

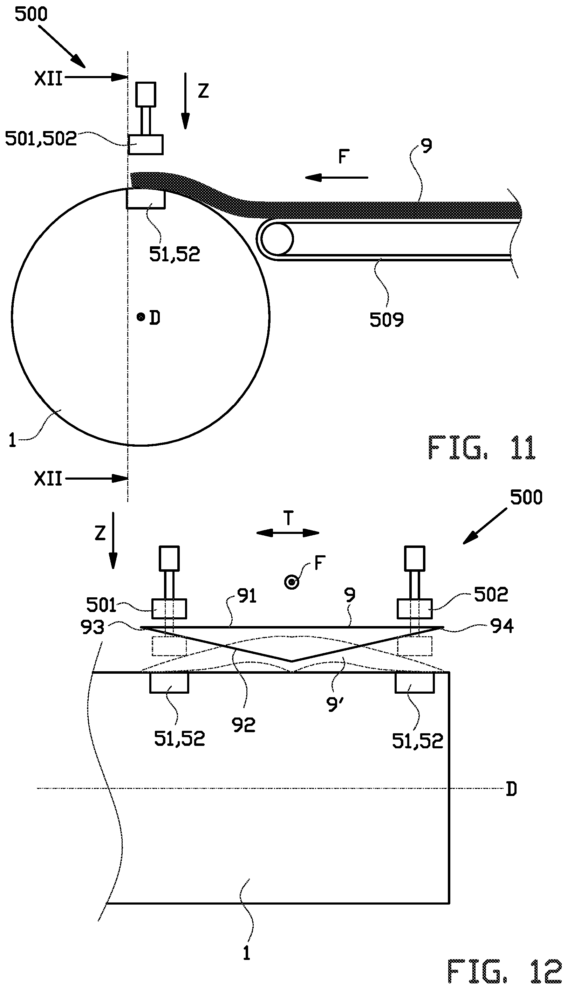

Figures 11 and 12 show an alternative method for applying a tire component 9 to the tire building drum 1 using an applicator 500 with at least one application member 501 for applying pressure on the tire component 9.

As shown in figure 11, the tire component 9 is supplied to the tire building drum 1 in a feeding direction or a supply direction F, in this example by a conveyor 509, e.g. a belt conveyor.

As shown in figure 12, the tire component 9, in this example a side wall, has a cross section perpendicular to the supply direction F that, in an unstressed or relaxed state, has a flat side 91 facing away from the tire building drum 1 and a non-flat side 92 facing towards the tire building drum 1. In this example, the non-flat side 92 is defined by a first tapering portion 93 and a second tapering portion 94 at opposite lateral ends of the cross section in the lateral direction T. In the context of side walls, the tapering portions 93, 94 are also known as 'wings' or 'wing tips'.

In this example, the applicator 500 comprises a first application member 501 and a second application member 502 which are positioned opposite to the tire building drum 1. The first application member 501 and the second application member 502 are configured so as to be aligned with the first tapering portion 91 and the second tapering portion 92, respectively, when the tire component 9 is first applied to the tire building drum 1. In other words, the application members 501, 502 are configured to press the tire component 9 onto the tire building drum 1 at the leading end of said tire component 9.

The application members 501, 502 may be shaped as fingers, blocks or convex pressing members to effectively press down onto the tire component 9 while reducing imprints. The application members 501, 502 are moved, preferably linearly, with at least a component in a pressing direction Z normal to the circumferential surface of the tire building drum 1 at the location of the suction openings 51, 52. The application members 501, 502 may be moved by any suitable actuators, such as pneumatic or hydraulic cylinders, linkages, gear racks, spindles, servo motors or the like.

The pressure exerted by the application members 501, 502 onto the tire component 9 cause it to deform into a deformed tire component 9' with a cross sectional shape as shown in dashed lines in figure 12. In particular, the previously flat side 91 is now non-flat and the previously non-flat side 92 has been deformed towards or into a more flat surface, in particular at the location of the respective suction openings 51, 52 in the tire building drum 1. The flattened or more flat contour of the tire component 9 can be retained more reliably with suction.

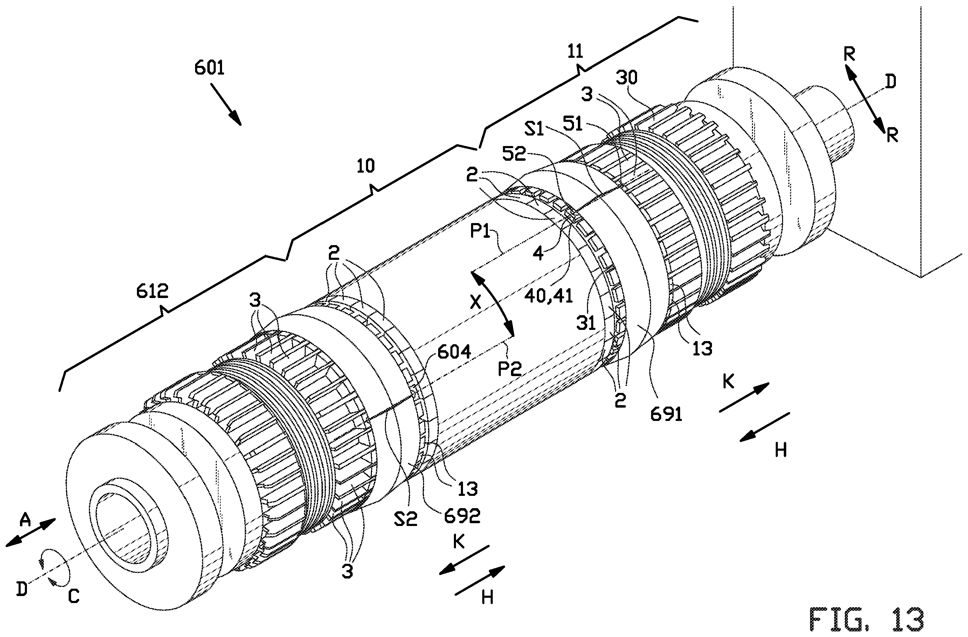

Figure 13 shows an alternative tire building drum 601 according to a third exemplary embodiment of the invention, which differs from the tire building drum 1 as shown in figure 1 in that the cover 604 at the second drum half 612 is in a different position to the cover 4 at the first drum half 11. In particular, the cover 4 at the first drum half 11 is in a first splice position P1 for retaining the leading end of the first tire component 691 to the alternative tire building drum 601 to form a first splice S1 together with the trailing end of the same first tire component 691 at or near said first splice position P1. In contrast, the cover 604 at the second drum half 612 is in a second splice position P2 that is offset over an offset distance X in the circumferential direction C about the drum axis D for retaining the leading end of the second tire component 692 to the alternative tire building drum 601 to form a second splice S2 together with the trailing end of the same second tire component 692 at or near said second splice position P2. In this example, the tire components 691, 692 are both side walls.

The offset between the splices S1, S2 can reduce imbalance in the tire that is ultimately formed as a result of the splices.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

### LIST OF REFERENCE NUMERALS

- 1: tire building drum
- 10: center section
- 11: first drum half
- 12: second drum half
- 13: further covers
- 14: cover base
- 15: pressure chamber
- 16: main check valve
- 2: bead-lock segment
- 3: turn-up arm
- 30: arm body
- 31: roller
- 4: cover
- 40: plate body
- 41: support surface
- 42: back surface
- 5: retaining element
- 51: first suction opening
- 52: second suction opening
- 6: closing valve
- 60: base plate
- 61: first port
- 62: second port
- 63: closure cap
- 64: first aperture
- 65: second aperture
- 66: slot
- 7: duct
- 71: first duct section
- 72: second duct section
- 8: drum shaft
- 9: tire component
- 9': deformed tire component
- 91: flat side
- 92: non-flat side
- 93: first tapering portion
- 94: second tapering portion
- 104: alternative cover
- 105: retaining element
- 151: first suction opening
- 106: closing valve
- 200: transfer wheel
- 201: circumferential surface
- 210: mounting body
- 202: pusher segment
- 220: segment body
- 221: slot
- 222: duct
- 223: universal connection
- 203: push-off member
- 204: retaining segment
- 300: alternative transfer wheel
- 302: pusher segment
- 303: push-off member
- 400: clip bar
- 500: applicator
- 501: first application member
- 502: second application member
- 509: conveyor
- 601: alternative tire building drum
- 612: second drum half
- 604: cover
- A: axial direction
- B1: first segment position
- B2-Bn: further segment positions
- C: circumferential direction
- D: drum axis
- F: supply direction
- H: return direction
- K: retraction direction
- L: longitudinal direction
- P: cover position
- P1: first splice position
- P2: second splice position
- R: radial direction
- S: transfer wheel axis
- S1: first splice
- S2: second splice
- T: lateral direction
- V: retraction direction
- W: push-off direction
- X: offset
- Z: pressing direction

## Claims

1. Transfer wheel (200) for transferring a tire component to a tire building drum, wherein the transfer wheel defines a circumferential surface (201) extending about a transfer wheel axis (S), wherein the transfer wheel (200) comprises a pusher segment (202) arranged at a first segment position along said circumferential surface, wherein the pusher segment comprises a segment body that is configured to be flush with the circumferential surface,
**characterized in that** the pusher segment comprises a plurality of push-off members (203) arranged adjacent to each other in a lateral direction parallel to the transfer wheel axis in said segment body movable relative to each other and the segment body in a push-off direction (W) facing radially outward relative to the transfer wheel axis (S) between a flush position in which the plurality of push-off members are flush with the circumferential surface (201) and a push-off position radially outside of said circumferential surface.

2. Transfer wheel according to claim 1, wherein the plurality of push-off members define a shape of the circumferential surface that is adaptable to a contour of the tire component when transferring said tire component to the tire building drum.

3. Transfer wheel according to any one of the preceding claims, wherein the plurality of push-off members are pneumatically driven.

4. Transfer wheel according to any one of the preceding claims, wherein the segment body comprises a plurality of slots for receiving the plurality of push-off members, wherein the segment body further comprises a duct for connecting the plurality of slots to a source of compressed air or partial vacuum.

5. Transfer wheel according to any one of the preceding claims, wherein the pusher segment comprises at least ten push-off members.

6. Transfer wheel according to any one of the preceding claims, wherein the transfer wheel comprises a mounting body, wherein the pusher segment is detachably mounted to the mounting body in said first segment position.

7. Transfer wheel according to any one of the preceding claims, wherein the transfer wheel comprises a plurality of retaining segments distributed about the transfer wheel axis in a plurality of further segments positions along the circumferential surface for retaining the tire component to said circumferential surface, wherein the pusher segment is exchangeable with any one of the retaining segments in any one of the further segment positions.

8. Method for transferring a tire component to a tire building drum with the use of the transfer wheel according to any one of the preceding claims, wherein the method comprises the steps of:
- moving the plurality of push-off members in the push-off direction to separate the tire component from the transfer wheel at the first segment position; and
- applying the tire component to the tire building drum with pressure exerted onto said tire component by the plurality of push-off members.

9. Method according to claim 8, wherein the tire component has a contour with a varying thickness in a cross section at the first segment position, wherein the plurality of push-off members are configured to match the contour of the tire component when moving in the push-off direction.

10. Method according to claim 8 or 9, wherein the method further comprises the step of:
- retracting the plurality of push-off members in a retraction direction opposite to the push-off direction independently of the contact between the plurality of push-off members and the tire component.

11. Method according to any one of claims 8-10, wherein the tire component is a side wall.

12. Method according to any one of claims 8-10, wherein the method comprises the steps of:
- applying a first side wall to the tire building drum and forming a first splice between a leading end and a trailing end of said first side wall at a first splice position on the tire building drum;
- applying a second side wall to the tire building drum and forming a second splice between a leading end and a trailing end of said second side wall at a second splice position on the tire building drum;
wherein the second splice position is offset in a circumferential direction of the tire building drum with respect to the first splice position.

## Patentansprüche

1. Transferrad (200) zum Übertragen einer Reifenkomponente auf eine Reifenaufbautrommel, wobei das Transferrad eine Umfangsfläche (201) definiert, die sich um eine Transferradachse (S) erstreckt, wobei das Transferrad (200) ein Schiebersegment (202) aufweist, das an einer ersten Segmentposition entlang der Umfangsfläche angeordnet ist, wobei das Schiebersegment einen Segmentkörper aufweist, der so konfiguriert ist, dass er bündig mit der Umfangsfläche ist,
**dadurch gekennzeichnet, dass**
das Schiebersegment eine Vielzahl von Abstoßelementen (203) aufweist, die benachbart zueinander in einer seitlichen Richtung parallel zu der Transferradachse angeordnet ist und die in dem Segmentkörper relativ zueinander und dem Segmentkörper, in einer Abstoßrichtung (W), die radial nach außen zeigt, relativ zu der Transferradachse (S), zwischen einer bündigen Position, in der die Vielzahl von Abstoßelementen bündig mit der Umfangsfläche (201) ist, und einer Abstoßposition, in der die Vielzahl von Abstoßelementen radial außerhalb der Umfangsfläche ist, beweglich ist.

2. Transferrad nach Anspruch 1, wobei die Vielzahl von Abstoßelementen eine Form der Umfangsfläche definiert, die an eine Kontur der Reifenkomponente anpassbar ist, wenn die Reifenkomponente auf die Reifenaufbautrommel übertragen wird.

3. Transferrad nach einem der vorhergehenden Ansprüche, wobei die Vielzahl von Abstoßelementen pneumatisch angetrieben wird.

4. Transferrad nach einem der vorhergehenden Ansprüche, wobei der Segmentkörper eine Vielzahl von Schlitzen zum Aufnehmen der Vielzahl von Abstoßelementen aufweist, wobei der Segmentkörper ferner einen Kanal zum Verbinden der Vielzahl von Schlitzen mit einer Quelle von Druckluft oder Teilvakuum aufweist.

5. Transferrad nach einem der vorhergehenden Ansprüche, wobei das Schiebersegment mindestens zehn Abstoßelemente aufweist.

6. Transferrad nach einem der vorhergehenden Ansprüche, wobei das Transferrad einen Montagekörper aufweist, wobei das Schiebersegment abnehmbar an dem Montagekörper in der ersten Segmentposition montiert ist.

7. Transferrad nach einem der vorhergehenden Ansprüche, wobei das Transferrad eine Vielzahl von Haltesegmenten aufweist, die um die Transferradachse in einer Vielzahl von weiteren Segmentpositionen entlang der Umfangsfläche verteilt ist, um die Reifenkomponente an der Umfangsfläche zu halten, wobei das Schiebersegment mit jedem aus den Haltesegmenten in jeder aus den weiteren Segmentpositionen austauschbar ist.

8. Verfahren zum Übertragen einer Reifenkomponente auf eine Reifenaufbautrommel, unter Verwendung des Transferrads nach einem der vorhergehenden Ansprüche, wobei das Verfahren die folgenden Schritte aufweist:
Bewegen der Vielzahl von Abstoßelementen in die Abstoßrichtung, um die Reifenkomponente von dem Transferrad an der ersten Segmentposition zu trennen; und
Aufbringen der Reifenkomponente auf die Reifenaufbautrommel mit Druck, der auf die Reifenkomponente durch die Vielzahl von Abstoßelementen ausgeübt wird.

9. Verfahren nach Anspruch 8, wobei die Reifenkomponente in einem Querschnitt an der ersten Segmentposition eine Kontur mit einer variierenden Dicke aufweist, wobei die Vielzahl von Abstoßelementen so konfiguriert ist, dass sie der Kontur der Reifenkomponente entspricht, wenn sie sich in die Abstoßrichtung bewegt.

10. Verfahren nach Anspruch 8 oder 9, wobei das Verfahren ferner den folgenden Schritt aufweist:
Zurückziehen der Vielzahl von Abstoßelementen in eine Rückzugsrichtung, die entgegengesetzt zur Abstoßrichtung ist, unabhängig vom Kontakt zwischen der Vielzahl von Abstoßelementen und der Reifenkomponente.

11. Verfahren nach einem der Ansprüche 8-10, wobei die Reifenkomponente eine Seitenwand ist.

12. Verfahren nach einem der Ansprüche 8-10, wobei das Verfahren die folgenden Schritte aufweist:
Aufbringen einer ersten Seitenwand auf die Reifenaufbautrommel und Ausbilden einer ersten Verbindung zwischen einem vorderen Ende und einem hinteren Ende der ersten Seitenwand an einer ersten Verbindungsposition auf der Reifenaufbautrommel;
Aufbringen einer zweiten Seitenwand auf die Reifenaufbautrommel und Ausbilden einer zweiten Verbindung zwischen einem vorderen Ende und einem hinteren Ende der zweiten Seitenwand an einer zweiten Verbindungsposition auf der Reifenaufbautrommel;
wobei die zweite Verbindungsposition in einer Umfangsrichtung der Reifenaufbautrommel in Bezug auf die erste Verbindungsposition versetzt ist.

## Revendications

1. Roue de transfert (200) pour transférer un composant de pneu à un tambour de construction de pneu, la roue de transfert définissant une surface périphérique (201) s'étendant autour d'un axe de roue de transfert (S), la roue de transfert (200) comprenant un segment pousseur (202) disposé à une première position de segment le long de ladite surface périphérique, le segment pousseur comprenant un corps de segment qui est configuré pour affleurer la surface périphérique,
**caractérisée par le fait que** le segment pousseur comprend une pluralité d'éléments de poussée (203) disposés adjacents l'un à l'autre dans une direction latérale parallèle à l'axe de roue de transfert dans ledit corps de segment, mobiles l'un par rapport à l'autre et au corps de segment dans une direction de poussée (W) orientée radialement vers l'extérieur par rapport à l'axe de roue de transfert (S) entre une position d'affleurement dans laquelle les différents éléments de poussée affleurent la surface périphérique (201) et une position de poussée radialement à l'extérieur de ladite surface périphérique.

2. Roue de transfert selon la revendication 1, dans laquelle les différents éléments de poussée définissent une forme de la surface périphérique qui est adaptable à un contour du composant de pneu lors d'un transfert dudit composant de pneu au tambour de construction de pneu.

3. Roue de transfert selon l'une quelconque des revendications précédentes, dans laquelle les différents éléments de poussée sont entraînés pneumatiquement.

4. Roue de transfert selon l'une quelconque des revendications précédentes, dans laquelle le corps de segment comprend une pluralité de fentes pour recevoir les différents éléments de poussée, le corps de segment comprenant en outre un conduit pour relier les différentes fentes à une source d'air comprimé ou de vide partiel.

5. Roue de transfert selon l'une quelconque des revendications précédentes, dans laquelle le segment pousseur comprend au moins dix éléments de poussée.

6. Roue de transfert selon l'une quelconque des revendications précédentes, dans laquelle la roue de transfert comprend un corps de montage, le segment pousseur étant monté de manière détachable sur le corps de montage dans ladite première position de segment.

7. Roue de transfert selon l'une quelconque des revendications précédentes, dans laquelle la roue de transfert comprend une pluralité de segments de retenue répartis autour de l'axe de roue de transfert dans une pluralité d'autres positions de segment le long de la surface périphérique pour retenir le composant de pneu sur ladite surface périphérique, le segment pousseur étant échangeable avec l'un quelconque des segments de retenue dans l'une quelconque des autres positions de segment.

8. Procédé de transfert d'un composant de pneu à un tambour de construction de pneu à l'aide de la roue de transfert selon l'une quelconque des revendications précédentes, dans lequel le procédé comprend les étapes consistant à :
- déplacer les différents éléments de poussée dans la direction de poussée pour séparer le composant de pneu de la roue de transfert à la première position de segment ; et
- appliquer le composant de pneu sur le tambour de construction de pneu avec une pression exercée sur ledit composant de pneu par les différents éléments de poussée.

9. Procédé selon la revendication 8, dans lequel le composant de pneu a un contour avec une épaisseur variable dans une section transversale à la première position de segment, les différents éléments de poussée étant configurés pour correspondre au contour du composant de pneu lors d'un déplacement dans la direction de poussée.

10. Procédé selon l'une des revendications 8 ou 9, dans lequel le procédé comprend en outre l'étape consistant à :
- rétracter les différents éléments de poussée dans une direction de rétractation opposée à la direction de poussée, indépendamment du contact entre les différents éléments de poussée et le composant de pneu.

11. Procédé selon l'une quelconque des revendications 8 à 10, dans lequel le composant de pneu est un flanc.

12. Procédé selon l'une quelconque des revendications 8 à 10, dans lequel le procédé comprend les étapes consistant à :
- appliquer un premier flanc sur le tambour de construction de pneu et former une première jonction entre une extrémité avant et une extrémité arrière dudit premier flanc à une première position de jonction sur le tambour de construction de pneu ;
- appliquer un second flanc sur le tambour de construction de pneu et former une seconde jonction entre une extrémité avant et une extrémité arrière dudit second flanc à une seconde position de jonction sur le tambour de construction de pneu ;
la seconde position de jonction étant décalée dans une direction périphérique du tambour de construction de pneu par rapport à la première position de jonction.
